# EUROPEAN PATENT APPLICATION

(11) **EP 4 435 931 A1**
(43) Date of publication of application: **25.09.2024**
(21) Application number: 22896036.5
(22) Date of filing: 16.11.2022
(51) Int. Cl.: H01M 10/54, B02C 23/08, H01M 50/20

(54) **MOVABLE BATTERY PACK PROCESSING DEVICE AND PROCESSING METHOD**

(30) Priority: 16.11.2021 KR 20210157162
(71) Applicant: POSCO Co., Ltd, Pohang-si, Gyeongsangbuk-do 37859 (KR); RESEARCH INSTITUTE OF INDUSTRIAL SCIENCE & TECHNOLOGY, Pohang-si, Gyeongsangbuk-do 37673 (KR)
(72) Inventor: WI, Hyeon-Gon, Pohang-si, Gyeongsangbuk-do 37660 (KR); LEE, Lae-Kyoung, Dalseong-gun, Daegu 43016 (KR); PARK, Tae-Joon, Pohang-si, Gyeongsangbuk-do 37669 (KR)
(74) Representative: Nederlandsch Octrooibureau
(86) International application number: PCT/KR2022/018028
(87) International publication number: WO 2023/090830

(57) **Abstract**

The present invention relates to a movable battery pack processing device comprising: a first container to which a discharging module or a cooling module is mounted; and a second container to which a battery pack processed by the discharging module or the cooling module of the first container is transferred and to which a disassembling module for disassembling the battery pack is mounted. According to the present invention, a waste battery disassembling process is modularized, so that cost required for a waste battery processing can be reduced and stability also can be significantly improved.

## Description

### Technical Field

The present disclosure relates to a battery pack processing device and processing method, and more particularly, to a movable module system for disassembling waste battery packs generated by electric vehicles or the like.

### Background Art

Recently, eco-friendly vehicles, such as electric vehicles and hydrogen vehicles, have become increasingly prevalent, and considering the replacement cycle of these eco-friendly vehicles, it is expected that waste vehicle batteries will be collected from about 10,000 electric vehicles per year in 2024 and it is expected that, by 2031, waste vehicle batteries will be collected from about 100,000 electric vehicles per year.

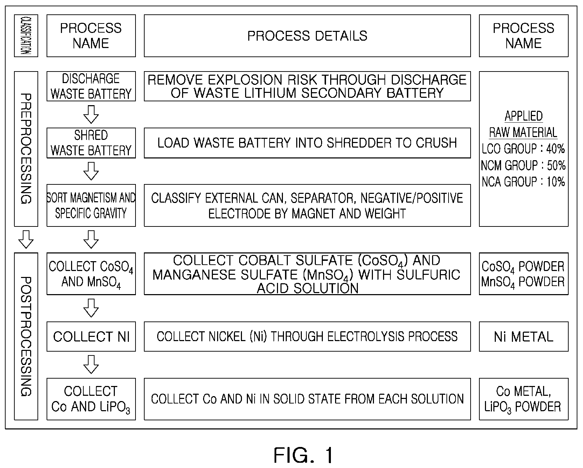

In general, a process of collecting expensive metals by recycling waste batteries for electric vehicles mainly uses hydrometallurgical smelting after discharging, shredding, crushing, sintering and separation processes as shown in FIG. 1, and in some cases, the discharging process is omitted, and a process of dry melting and then separation has been commercialized and used.

On December 10, 2020, the 'Amendment to the Act on Resource Circulation of Electrical and Electronic Products and Automobiles,' which established the legal basis for the installation operation, work, and budget of the future waste resources base collection center, passed the plenary session of the National Assembly. In accordance with this amendment, the Ministry of Environment has built a future waste resources base collection center at the Korea Environment Corporation's sites in four regions. In the future, regional future waste resources base collection centers will play a role of managing the entire waste disposal process, including disassembling and collecting waste batteries, storing, evaluating, and selling them in the case of scrapping electric vehicles.

Storage and transfer of waste electric vehicle batteries are essential for collection at future waste resource collection centers and selling to recycling plants. The standards related to storage and transfer are as follows.

According to the "Research on Establishment of Recycling Methods and Standards for Electric Vehicle Waste Batteries (Ministry of Environment, 2018)," waste batteries are to be removed from electric vehicles, discharged, and stored in a steel case for fire prevention. Regarding the transfer of waste batteries for electric vehicles, "Electric Vehicle Battery Safety Collection, Disassembly, and Storage Manual (Ministry of Environment, 2019)" only mentions battery terminal processing methods and battery packaging materials.

In this situation, at 3:36 pm on December 28, 2020, a fire broke out in a 25-ton cargo truck transporting waste batteries on a road in Yongjin-eup, Wanju-gun, Jeollabuk-do, and all 3 tons of waste electric vehicle batteries were burned, resulting in property damage estimated at 15.5 million won by the local fire station, and such accidents are likely to occur again in the future.

To solve this problem, Germany's Stφbich technology GmbH developed a product called STRAINBOX. This product, having functions of a gas filter system, blocking sparks or flames, and preventing liquid leaks, was developed for transporting lithium-ion batteries. However, the high price is an obstacle to widespread use. A STRAINBOX that may accommodate a 60kwh waste battery for electric vehicles costs about 10,000 euros, which may be difficult to spread for transfer.

### Summary of Invention

### Technical Problem

An aspect of the present disclosure is to provide a movable battery pack processing device and processing method having improved cost and stability by modularizing a waste battery disassembly process without the need for transfer of waste batteries.

### Solution to Problem

According to an aspect of the present disclosure, a movable battery pack processing device includes: a first container includes a discharge module or a cooling module; and a second container, to which a battery pack discharged from the discharge module of the first container is transferred, and including a disassembly module disassembling the discharged battery pack.

The first container and the second container may be movable.

The first container and the second container may be moved by separate moving units, respectively.

The first container and the second container may include a conveyor belt for interconnection.

The discharge module may include a reverse voltage discharge device.

The disassembly module may include a cutting device utilizing a blade, a laser, and a waterjet.

The disassembly module may include a shredding device.

The shredding device may be provided in plural.

The disassembly module further includes a sorting device.

The movable battery pack processing device may further include a third container accommodating battery pack pole pieces disassembled in the disassembly module of the second container.

The third container includes a conveyor belt for interconnection with the second container.

The third container may be movable.

According to another aspect of the present disclosure, a battery pack processing method includes: moving a first container includes a cooling or discharge module of a battery pack and a second container includes a disassembly module for disassembling the discharged battery pack to a location in which raw materials are present; fixing and coupling the first container and the second container; and discharging and disassembling the battery pack in the first container and the second container.

The battery pack processing method may further include: accommodating the disassembled battery pack in a third container accommodating battery pack pole pieces.

The battery pack processing method may further include: releasing the coupling and fixing of the first container and the second container, after discharging and disassembling the battery pack.

### Advantageous Effects of Invention

According to the present disclosure, by modularizing the waste battery disassembly process and configuring a battery pack as a movable type, the cost consumed in waste battery processing may be reduced and stability may also be significantly improved.

### Brief Description of Drawings

FIG. 1 schematically illustrates a process of collecting expensive metals by recycling waste batteries for electric vehicles.

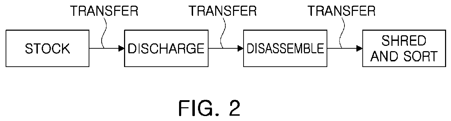

FIG. 2 schematically illustrates a battery pack processing method according to an embodiment of the present disclosure.

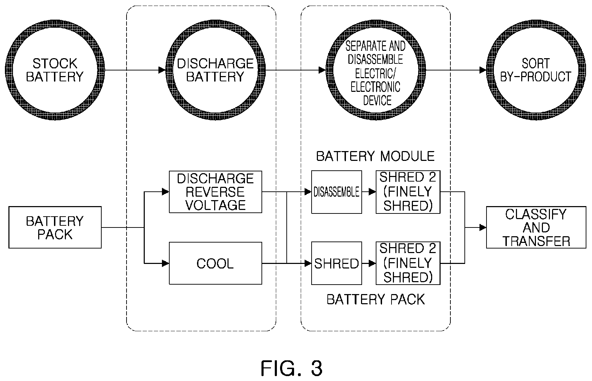

FIG. 3 schematically illustrates a battery pack processing method according to an embodiment of the present disclosure.

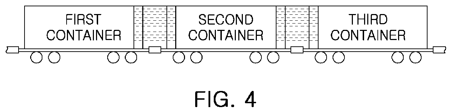

FIG. 4 schematically illustrates a battery pack processing device according to an embodiment of the present disclosure.

### Best Mode for Invention

Hereinafter, embodiments of the present disclosure will be described with reference to various examples. However, the embodiments of the present disclosure may be modified into various other forms, and the scope of the present disclosure is not limited to the embodiments described below.

The present disclosure relates to a movable battery pack processing device and processing method, and more particularly, to a movable module system for disassembling waste battery packs generated by electric vehicles, etc.

The discharging and disassembling process for processing waste batteries used previously involves discharging and disassembling using equipment fixedly installed on the ground, and to this end, waste batteries should be transferred to a location in which the equipment is located. Since there is a risk of fire and explosions when transferring such waste batteries, waste battery-dedicated containers having separate dust-proof and explosion-proof functions are used to prevent fire and explosions. However, assuming that the price of a 60KWh waste battery storage container is about 10,000 euros, the burden of logistics costs due to the use of the corresponding container and the burden of operating costs due to building and operating the device may have a negative impact on the pursuit of economic feasibility in recycling waste batteries in reality.

In order to solve this problem, the present inventors completed the present disclosure based on the recognition that cost and safety may be secured by configuring a movable battery processing device including individual containers in a modular form for detailed sub-processes related to a waste battery disassembling process, transporting the battery processing device to a location where waste batteries are accumulated, and performing a disassembling process.

Accordingly, according to one aspect of the present disclosure, there is provided a battery pack processing device including a first container includes a discharge module or a cooling module and a second container, to which a battery pack discharged from the discharge module of the first container is transferred, including a disassembly module disassembling the discharged battery pack.

A movable battery pack processing device according to an embodiment of the present disclosure may include a first container includes a cooling module. The cooling module is not particularly limited, but may be, for example, an electric cryogenic cooling chamber that may cool the entire battery pack to a cryogenic state. By cooling and solidifying the battery pack to about -130 °C, the cooling module may perform a function of primarily maintaining battery cells in conduction/operation unavailable state due to freezing of the electrolyte inside the battery and easily crushing and disposing of by-products unnecessary for battery recycling, such as plastic, Styrofoam, and rubber pads installed other than the battery model/cell.

Through cooling using the cooling module, batteries may be stably disassembled by using existing physical disassembly and cutting devices without separate discharge and incineration, a shredding process of unnecessary products related to the subsequent disassembly process may be simplified, and the durability of equipment and work efficiency in the classifying and sorting process may increase. In addition, in the case of using the cooling module, no special technology or structure is required for the installation and operation related to the discharge process or accidents, such as fire and explosions, making it structurally simple, and large quantities of reliable battery packs required to perform subsequent processes (disassembly, shredding, and sorting) may be automatically and rapidly processed. Accordingly, in addition to the effect of securing equipment and operational economical efficiency that may reduce operating costs of the entire battery recycling process, a resource recovery rate in a post-disassembling process (dry and wet process) is secured and a processing process related to environmental pollution may be simplified.

The battery pack processing device according to another embodiment of the present disclosure may include the first container includes a discharge module. The discharge module may be a discharge module using a reverse voltage method. More specifically, the discharge module may be a discharge module including a first discharge operation of connecting a battery and a power converter and applying a voltage to discharge the battery and a second discharge operation of applying a voltage (a reverse voltage) opposite to the first discharge operation to discharge the battery, after the first discharge operation. It can be confirmed that, after discharging a typical lithium-ion battery to 0V with SOC '0' or less (2.5V to 3V), when a few minutes to several tens of minutes await, a terminal voltage is recovered, and at this time, it can be confirmed that, if discharge is attempted again, a significant amount of initial discharge current is generated. From this, it may be inferred that there is a significant amount of Li that is not discharged in a negative electrode through normal discharge. However, in the case of a discharge module using the reverse voltage method of the present disclosure, the remaining lithium in the negative electrode may be resolved by applying a reverse voltage from a point in time at which 0V appears during discharge, and maintaining this state for a certain period of time may develop to an internal short circuit, thereby controlling a terminal voltage of the battery to an unrecoverable state. Accordingly, there is an effect of significantly improving work stability.

In the movable battery pack processing device of the present disclosure, a discharged or cooled battery pack is transferred from the first container includes a discharge module or a cooling module, and the movable battery pack processing device of the present disclosure may include the second container includes a disassembly module for disassembling the discharged battery pack.

The disassembly module may include a device for cutting a discharged or cooled battery pack. For example, the cutting device may be one or more types selected from blade, laser, and waterjet cutting devices. Specifically, the battery pack processed in the cooling or discharge module may be disassembled into a unit size or module form using a physical cutting device, such as a blade or laser, based on consideration of the structural characteristics of the battery pack for each battery manufacturer. Through this, the efficiency of the subsequent shredding process and operational efficiency may be secured, and the disassembly process may be performed based on the selection of effective battery pack cutting standards to prevent overload of a crusher in the shredding process, simplify the selection process, and increase the lifespan and productivity of the crusher.

In general, processes such as an optimal cutting position, path, or the like, for generating a battery module cut to a unit size required for the shredding process are processed based on an automation process through programming under conditions that minimize the loss of battery recovery materials based on a mechanical structure of the battery pack and assembly information of cells and modules using registration information of the battery pack at the time of stock, and the battery module cut through such processes is transferred to a shredding device and a shredding process is performed. The battery pack that has been cooled or discharged is in a safe state without a danger of explosion, fire, or odor even if external physical force is applied, and thus, considering the material and unit cut size of the battery pack, it has flexibility in the cutting and disassembling process using blades, lasers, and water jets without any device restrictions.

The disassembly module may include a shredding device that shreds the battery pack cut from the cutting device.

The shredding device may be a commonly used shredder and may include, for example, a shaft-based shredder that smoothly shreds the transferred battery pack through rotation of a plurality of shredding blades fixed to a rotor in the shredder and a main body fixed blade on a saw blade. In addition, the shredding device may include a classifier that classifies various by-products (plastics, non-ferrous metals, antifreeze, etc.) generated during the shredding process by material. In particular, impurities such as plastic, Styrofoam, and rubber that have gone through a low-temperature (-60 to 120°C) cooling process are easily crushed in the primary shredding device even with a small amount of impact through friction with multiple shredding blades, and thus, 90 % or more of plastic impurities are discharged to the classifier after the first shredding. For this reason, by installing a separate classification and collection device in a modular manner within the shredding device, by-products may be effectively collected and processed by stages. Meanwhile, one or more shredding devices may be provided and, for example, a primary shredding device for crushing into a unit module size and a secondary shredding device for finely crushing the same may be provided.

The disassembly module may further include a sorting device for sorting the shredded materials from the cutting and shredding device. The sorting device may sort and collect materials, such as rubber, fiber, and glass in addition to major ferrous and non-ferrous metals after the cutting and shredding-based disassembly process. The sorting device is not particularly limited and may include a combination of a dry or wet specific gravity sorter, a molding machine, etc. to perform the sorting operation.

The disassembly module according to the present disclosure may determine the number of times of shredding, the size of shreds, and whether to perform an additional sorting process depending on the characteristics of the process (refining, recovery) after cutting, enabling flexible operation to suit the user's purpose. This ultimately has the effect of generating battery disassembly by-products in the desired form.

The battery pack processing device according to the present disclosure may include a third container accommodating battery pack pole pieces processed in the disassembly module. The battery pack processing device according to the present disclosure accommodates the battery pack pole pieces processed through the cooling or discharging and disassembly process and transfer them to a final destination, such as a waste resource base collection center.

The first container, second container, and third container may include a conveyor belt for interconnection. More specifically, the battery pack processing method according to the present disclosure includes moving a first container includes a cooling or discharge module of a battery pack and a second container includes a disassembly module for disassembling the discharged battery pack to a location in which raw materials are present; fixing and coupling the first container and the second container; and discharging and disassembling the battery pack in the first container and the second container. At this time, the waste battery processed in the cooling or discharge module may be transferred from the first container to the second container by the conveyor belt. In a similar manner, the disassembled battery pack pole pieces may be transferred from the second container to the third container by the conveyor belt and accommodated in the third container.

Meanwhile, at this time, an anti-pollution device protecting the surroundings from environmental pollutants by moving a square tube surrounding the side and top of each container from a container surface to block a space between the containers may be additionally provided.

After discharging and disassembling the battery pack, an operation of releasing the coupling and fixing of the first container and the second container may be performed, thereby completing the work.

As one of the features of the present disclosure, the first container, the second container, and the third container may be movable and may be moved by separate moving units, respectively. The moving unit is not particularly limited, but for example, a container may be loaded onto a vehicle and moved.

In this manner, by using the movable modular device, there is no need to use an expensive battery moving unit, and by transporting the battery processing device to a location in which waste batteries are accumulated and performing a disassembly process, costs may be reduced and safety may be secured.

While this disclosure includes specific examples, it will be apparent to those skilled in the art that modifications and variations could be made without departing from the scope of the present disclosure as defined by the appended claims.

## Claims

1. A movable battery pack processing device comprising:
a first container includes a discharge module or a cooling module;
a second container, to which a processed battery pack is transferred from the discharge module or cooling module of the first container, and includes a disassembly module to disassemble the battery pack; and
a third container includes a crushing module crushing the disassembled battery pack.

2. The movable battery pack processing device of claim 1, wherein the first container, the second container, and the third container are movable.

3. The movable battery pack processing device of claim 1 or 2, wherein the first container, the second container, and the third container are moved by separate moving units, respectively.

4. The movable battery pack processing device of any of claims 1 to 3, wherein the first container, the second container, and the third container include a conveyor belt for interconnection.

5. The movable battery pack processing device of any of claims 1 to 4, wherein the discharge module includes a reverse voltage discharge device.

6. The movable battery pack processing device of any of claims 1 to 5, wherein the disassembly module includes a blade, a laser, and a waterjet cutting device.

7. The movable battery pack processing device of any of claims 1 to 6, wherein the crushing module includes a shredding device.

8. The movable battery pack processing device of claim 7, wherein the shredding device may be provided in plural.

9. The movable battery pack processing device of any of claims 1 to 8, wherein the crushing module further includes a sorting device.

10. The movable battery pack processing device of any of claim 1 to 9, further comprising a fourth container accommodating battery pack pole pieces disassembled in the crushing module of the third container.

11. The movable battery pack processing device of claim 10, wherein the fourth container includes a conveyor belt for interconnection with the third container.

12. The movable battery pack processing device of claim 10 or 11, wherein the fourth container is movable.

13. A battery pack processing method comprising:
moving a first container includes a cooling or discharge module for a battery pack, a second container includes a disassembly module for cooling or disassembling the battery pack, and a third container includes a crushing module for crushing the disassembled battery pack to a location in which the battery pack to be processed is present;
fixing and coupling the first container, the second container, and the third container; and
discharging, cooling, disassembling, and crushing the battery pack in the first container, second container, and third container.

14. The battery pack processing method of claim 13, further comprising accommodating the disassembled battery pack in a fourth container accommodating battery pack pole pieces.

15. The battery pack processing method of claim 13 or 14, further comprising releasing the coupling and fixing of the first container, the second container, and the third container, after discharging and disassembling the battery pack.
